# EUROPEAN PATENT SPECIFICATION

(11) **EP 2 063 599 B1**
(45) Date of publication and mention of the grant of the patent: **03.07.2013**
(21) Application number: 07764281.7
(22) Date of filing: 26.07.2007
(51) Int. Cl.: H04L 29/12, H04W 8/26

(54) **A METHOD, SYSTEM, MOBILE NODE AND COMMUNICATION NODE FOR COMMUNICATION IN MOBILE IPV6 NETWORKS**
VERFAHREN, SYSTEM, MOBILER KNOTEN UND KOMMUNIKATIONSKNOTEN ZUR KOMMUNIKATION IN MOBILEN IPV6-NETZEN
PROCÉDÉ, SYSTÈME, NOEUD MOBILE ET NOEUD DE COMMUNICATION POUR UNE COMMUNICATION DANS DES RÉSEAUX MOBILES IPV6

(30) Priority: 31.08.2006 CN 200610111878
(43) Date of publication of application: 27.05.2009
(73) Proprietor: Huawei Technologies Co., Ltd., Shenzhen, Guangdong Province 518129 (CN)
(72) Inventor: LI, Chunqiang, Guangdong 518129 (CN)
(74) Representative: Körber, Martin Hans
(86) International application number: PCT/CN2007/070359
(87) International publication number: WO 2008/025269

(56) References cited:
- EP-A1- 1 657 877
- WO-A1-2006/016266
- CN-A- 1 453 962
- CN-A- 1 507 286
- CN-A- 1 595 911
- US-A1- 2004 236 937
- YING QIU ET AL: "Protocol for hiding movement of mobile nodes in mobile IPv6" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE LNKD- DOI:10.1109/VETECF.2005.1558037, vol. 2, 25 September 2005 (2005-09-25), pages 812-815, XP010878596 ISBN: 978-0-7803-9152-9
- KUBO T ET AL: "Mobile IP fast data transfer method using cooperation between mobility agents" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US LNKD- DOI:10.1109/GLOCOM.2003.1258880, vol. 6, 1 December 2003 (2003-12-01), pages 3473-3477, XP010677197 ISBN: 978-0-7803-7974-9

## Description

### BACKGROUND OF THE INVENTION

### Field of the Technology

The present invention relates to field of network communication technology, and more particularly to a method, system, mobile node, communication node, and home agent for communication in mobile Internet Protocol version 6 (IPv6) networks.

### Background of the Invention

Mobile IPv6 is a mobility solution at the network layer. The mobile IPv6 has three basic network entities: a mobile node (MN), a communication node (CN), and a home agent (HA).

An MN can be uniquely identified with a home address (HoA). When the MN roams to a foreign network, a care of address (CoA) is generated in a certain manner. The mobile IPv6 specifies that, when the MN moves from one link to another, the communication thereof using the HoA is not interrupted, and the mobility of the node is transparent to a transport layer and other upper-layer protocols. The mobile IPv6 defines two different modes to solve the mobility problem, i.e., a bi-directional tunnel mode and a route optimization mode.

In the bi-directional tunnel mode, the MN notifies the HA about the CoA thereof through a binding update (BU) message. Thus, the HA intercepts a packet sent to a home network of the MN for communicating with the MN, and forwards the packet to the MN via the tunnel mode. When the MN sends a packet to the CN, it needs to send the packet to the HA through the tunnel mode, and then the HA decapsulates and forwards the tunnel packet to the CN.

In the route optimization mode, the MN needs to be registered to the CN. First, a return routability procedure (RRP) is performed. If the RRP is successfully performed, the MN is enabled to binding update the CoA and the HoA to a binding cache list of the CN via a BU message, and directly transmit packets to the CN in the subsequent communication process, instead of forwarding packets through the HA.

In both the above two modes, a destination option extension header and a Type-2 routing header are used for packet transmission between the MN and the CN. The mobile IPv6 further adds an option to the IPv6 destination option extension header: HoA option. This HoA option is configured to notify the CN of the HoA of the MN by sending a datagram when the MN is in a foreign link. On the contrary, when the MN is in a foreign link and the CN sends a datagram to the MN, the mobile IPv6 adopts the Type-2 routing header to carry the HoA of the MN in the packet of the datagram, and the IPv6 destination field includes the CoA of the MN. In the bi-directional tunnel mode, the HA adds the destination option extension header and terminates the Type-2 routing header during the packet forwarding. In the route optimization mode, the MN and the CN respectively perform the above processing of extension header.

As the IPv6 has an address of 128 bits, the overhead of the packet header is greatly increased due to the HoA option or the Type-2 routing header included therein, so that a payload rate of data transmission by the mobile subscriber at a foreign link is lowered.

In another aspect, when the mobile IPv6 is used for communication, the privacy of the location is very important. Without any concealment, the sensitive data of the subscriber may be collected and analyzed, so that the activity of the subscriber may be detected and tracked, thereby seriously threatening the security of the mobile subscriber. When an MN is in a foreign link, as the HoA option in the sending packet and the Type-2 routing header in the receiving packet both contain the HoA of the MN, the packet may be easily intercepted and tracked by an eavesdropper. In order to prevent exposing an HoA of an MN located at a foreign link to the eavesdropper, currently, a substitute of home address (SHoA) is employed to replace the real HoA. However, the above solution has the following disadvantages. As the SHoA has the same length as the HoA, the overhead of the header is still rather large. Meanwhile, as being limited by the generation conditions for the SHoA, a lot of information is correlated, and thus it is difficult to achieve complete privacy.

US patent application NO. 2004/236937 A1 discloses a mechanism of providing privacy to nodes using mobile IPv6 with route optimization. A "privacy label" not allowing the home address to be visible during the exchange is used in place of a home address associated within a mobile node. The Privacy Label=MAC_Kbm XOR "string" where "string" is (home address∥current care of address) where "∥" denotes concatenation. The mobile node uses the privacy label in the home address.

YING QIU ET AL: "protocol for hiding movement of mobile nodes in mo-bile IPv6" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA, IEEE LNKD-DOI:10.1109/VETECF.2005.1558037, vol. 2, 25 September 2005 (2005-09-25), pages 812-815, XP010878596 ISBN:978-0-7803-9152-9, is directed to a protocol for hiding movement of mobile nodes in mobile IPv6. In this protocol, all of involved IP addresses (home address, care-of address and correspondent node's address) are hidden with their pseudo addresses. The pseudo HoA is used as temporary identifies of a mobile node in place of a real home ad-dress in MIPv6 header. The protocol does not change the format of IP packets in Mobile IPv6.

KUBO T ET AL: "Mobile IP fast data transfer method using cooperation between mobility agents" GLOBECOM'03.2003 - IEEE GLOBAL TELECOMMUNICA-TIONS CONFERENCE. CONFERENCE PROCEEDINGS. SAN FRANCISCO, CA, DEC. 15, 2003; [IEEE GLOBAL TELECOMMUNICATIONS CONFERENCE], NEW YORK, NY: IEEE, US LNKD- DOI:10.1109/GLOCOM.2003.1258880, vol. 6, 1 December 2003 (2003-12-01), pages 3473-3477, XP010677197 ISBN:978-0-7803-7974-9, is related to a mobile IP fast data transfer method using cooperation between mobility agents. A foreign agent, FA, informs a home agent, HA, of a visitor list, VL, array index in a registration process. When forwarding data packets, the FA can directly access the corresponding entry using the received index, which the HA adds on in a generic routing encapsulation, GRE, key field. The proposed method needs to modify only mobility agents; MNs and CNs remain unmodified.

### SUMMARY OF THE INVENTION

The technical problem is solved by a mobile node of claim 1 and its dependent claim, by a method of claim 3 and its dependent claims, and by a system of claim 6 and its dependent claims.

In the embodiments of the present invention, the HoA index and the HoA are bound, and the HoA index is adopted to substitute the HoA in a communication packet. As the HoA index is generally a simple pointer, the occupied space of the header is greatly reduced. Meanwhile, the HoA index is quite simple in content and is not relevant to any privacy parameter in content, thus ensuring the security of communication. Furthermore, even if a plurality of HoAs of the MN is bound to the same CoA, it does not cause any confusion.

### BRIEF DESCRIPTION OF THE DRAWINGS

The present invention is described in detail as follows by reference to the accompanying embodiments and drawings, among which:
FIG. 1 is a schematic flow chart of a method for communication in mobile IPv6 networks according to a first embodiment of the present invention;
FIG. 2 is a schematic flow chart of a method for communication in mobile IPv6 networks according to a second embodiment of the present invention;
FIG. 3 is a schematic view of a format of a binding index extension header according to the second embodiment of the present invention;
FIG. 4 is a schematic flow chart of a method for communication in mobile IPv6 networks according to a third embodiment of the present invention;
FIG. 5 is a schematic view of a format of a binding index extension header according to the third embodiment of the present invention; and
FIG. 6 is a schematic view of a structure of a system for communication in mobile IPv6 networks according to a fourth embodiment of the present invention.

### DETAILED DESCRIPTION OF THE EMBODIMENTS

A method for communication in mobile IPv6 networks is provided. In this method, first, a corresponding communication node (CN) is notified about an association relation between a home address (HoA) index and an HoA. Then, in a datagram, an HoA option and a Type-2 routing header are substituted by an HoA index option or a binding index extension header carrying the HoA index according to the above association relation stored in a cache entry of the CN. In addition, the association relation between the HoA index and the HoA may be notified through a binding update (BU) process. Furthermore, a system corresponding to the above method is also provided. The communication method and system of the present invention will be illustrated in detail below.

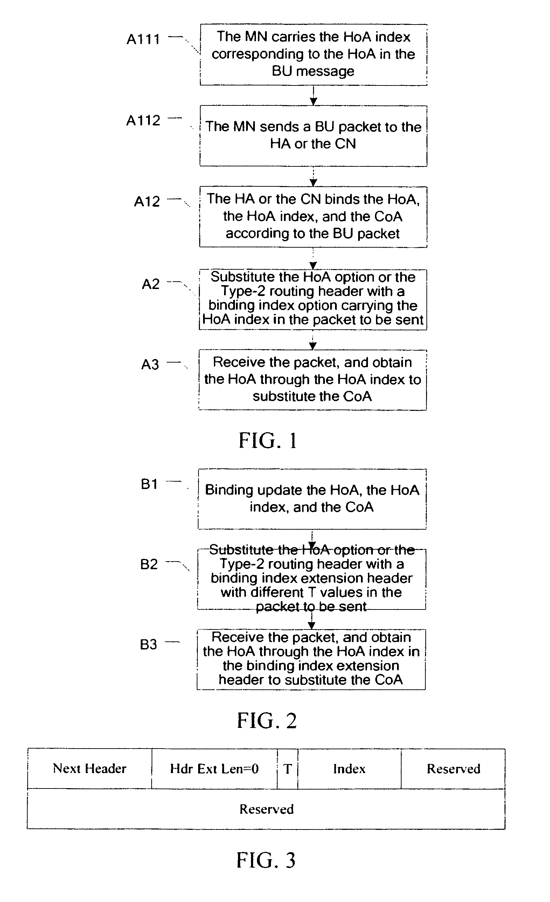

a method for communication in mobile IPv6 networks is provided. Referring to FIG. 1, the method includes the following steps.

In Step AI, an HA and/or a CN is notified about an association relation between an HoA and an HoA index of an MN. In this embodiment, the association relation is notified through a BU process, which further includes the following steps.

In Step A11, the MN sends a BU message to the HA or the CN.

In Step A111, the BU message includes the HoA and the HoA index respectively corresponding to the HoA.

The HoA index is uniquely corresponding to the HoA provided by the MN one by one. When an MN has one or more HoAs, an HoA list is stored in a cache of the MN in a form of an array, a link list, or another manner. Each of the n HoAs (n>=1) of the MN may establish a mapping relation with a set of numbers of 0 to (n-1) (or 1 to n). For example, the numbers of 0 to (n-1) (or 1 to n) may be array subscripts of the HoA list stored in arrays or storage location marks of the HoAs. Therefore, the array subscripts of the HoA list of the MN may serve as the corresponding HoA indexes, so that the HoA of the MN may be directly obtained through the corresponding HoA index.

In Step A 112, a BU packet is sent.

In the BU packet, as for the IPv6 header, a source address is the CoA, and a destination address is the CN or the HA, which are respectively corresponding to the BU of the CN or the HA; a destination option extension header carries the HoA option for placing the HoA or an SHoA thereof; and a mobility header is the BU message with options including a serial number, a home temporary random number index, a care-of temporary random number index, the HoA index, a message license code, and the like.

In Step A12, upon receiving the BU message, the HA or the CN performs binding update according to the BU message, so as to bind the HoA, the HoA index, and the CoA. Generally, the HA or the CN returns a binding acknowledge (BA) message for indicating the completion of the BU process to the MN. After that, the packet transmission is carried out between the nodes according to the updated binding cache entry.

Definitely, in order to store the HoA index, a field for storing the HoA index needs to be added in the binding cache entry of the MN, HA, or CN.

The above BU method is applicable to the BU process between the MN and the HA, and is also applicable to the BU process between the MN and the CN. However, before sending the BU message from the MN to the CN, a return routability procedure (RRP) needs to be performed. This procedure may be carried out according to the prior art, so the details will not be described herein again.

Definitely, in addition to the aforementioned manner of performing the binding update through sending a BU packet, other notification modes can also be employed to notify the association relation between the HoA and the HoA index. For example, a Home Test Init (HoTI) message in the RRP process may be used to carry the notification information. Any solution is feasible, as long as it can notify the communication node of the association relation.

In Step A2, a binding index option is added to the mobility header for carrying the HoA index, the HoA option or the Type-2 routing header is removed from the packet, and then the packet is sent. The packet may be sent in the following two manners.
1. When the MN in a foreign link sends a packet to the CN or the HA, the HoA option carried in the destination option extension header is removed from the packet, and a binding index option is set in the mobility header of the packet for carrying the HoA index corresponding to the HoA of the MN.
2. When the CN sends a packet to the MN in a foreign link, the Type-2 routing header is removed from the packet, and a binding index option is set in the mobility header of the packet for carrying the HoA index corresponding to the HoA of the MN.

In Step A3, the packet carrying the binding index option is received, and the HoA corresponding to the HoA index is obtained to substitute the CoA in the packet. There are two receiving circumstances corresponding to the two sending circumstances in Step A2.
1. After the CN or the HA receives the packet carrying the binding index option sent from the MN, the binding entry is searched for according to the CoA of the MN in the packet, and then the HoA corresponding to the HoA index in the binding index option is obtained to substitute the CoA in the packet.
2. After the MN receives the packet carrying the binding index option, the HoA corresponding to the HoA index in the binding index option is obtained to substitute the CoA in the packet.

As seen from the above, considering the processing of the binding index option, the MN is slightly different from the CN or the HA due to the following reasons. As for the MN, the HoA index carried by the binding index option is uniquely corresponding to the HoA, and thus there is no need to refer to other parameters. As for the CN or the HA, the HoA index is only a simple pointer, so that a corresponding binding entry should be first determined according to the CoA, and then the corresponding HoA is obtained through the HoA index.

The HoA index is only a very short pointer value, whereas the HoA or the SHoA carried in the HoA option or the Type-2 routing header has a length of 128 bits. Therefore, the header length can be greatly reduced. Besides, as the HoA index is the only parameter corresponding to the HoA in the packet, the communication security is further enhanced. Of course, the "binding index extension header" may not be used, and instead, a "binding index option" is added to the mobility header for carrying the HoA index.

In a second embodiment, a method for communication in mobile lPv6 networks is also provided. Referring to FIG 2, the method of this embodiment is substantially the same as that of the first embodiment, but the difference there-between lies in that, in this embodiment, a binding index extension header is adopted to carry an HoA index. The method includes the following steps.

In Step BI, a BU process is performed to binding update the association relation among the HoA, the HoA index, and the CoA to a binding cache entry of a communication node required for communication. This step may be carried out according to Step A1 in the first embodiment.

In Step B2, a binding index extension header is added to the lPv6 header for carrying the HoA index, the HoA option or the Type-2 routing header is removed from the packet, and then the packet is sent.

In this embodiment, the binding index extension header may adopt a format shown in FIG. 3. This extension header is defined according to a common format of an extension header in the IPv6. Referring to FIG. 3, the field of "Next Header" indicates the next extension header, the field of "Hdr Ext Len" indicates a length of this extension header, the field of "T" indicates a type, which occupies one bit, and the field of "Index" carries the HoA index value, which occupies 7 bits. In the field of "T", 0 or 1 is adopted to indicate whether the HoA corresponding to the HoA index carried by the extension header substitutes the source address or the destination address in the packet. Furthermore, in the field of "Index", if the length of the HoA index value exceeds 7 bits, the space of the following "Reserved" part can also be used.

The following two sending circumstances are provided according to different sets of the T field in the binding index extension header.
1. When the MN in a foreign link sends a packet to the CN or the HA, the HoA option carried in the destination option extension header is removed from the packet, and a binding index extension header is added to the IPv6 header of the packet for carrying the HoA index corresponding to the HoA of the MN. At this time, the T in the binding index extension header is set as 0 (or 1, as long as different conditions are distinguished by different values), and the Index carries the HoA index value.
2. When the CN sends a packet to the MN in a foreign link, the Type-2 routing header is removed from the packet, and a binding index extension header is added to the IPv6 header of the packet for carrying the HoA index corresponding to the HoA of the MN. At this time, the T in the binding index extension header is set as 1.

In Step B3, the packet carrying the binding index extension header is received, and the HoA corresponding to the HoA index is obtained to substitute the CoA in the packet. Similarly, two receiving circumstances are provided according to different sets of the T field in the binding index extension header.
1. After the CN or the HA receives the packet carrying the binding index extension header from the MN, it is determined that the T is set as 0, a binding entry is searched for according to the CoA of the MN in the packet, and then the HoA corresponding to the Index value in the binding index extension header is obtained to substitute the source address CoA in the packet.
2. After the MN receives the packet carrying the binding index extension header, it is determined that the T is set as 1, and then the HoA corresponding to the Index value in the binding index extension header is obtained to substitute the destination address CoA in the packet.

In this embodiment, a binding index extension header is added to carry the HoA index, and thus no binding index option needs to be set in the mobility header. Furthermore, as the requirement of the mobility header about byte alignment may cause a large overhead, the method of this embodiment effectively reduces the overhead of the header.

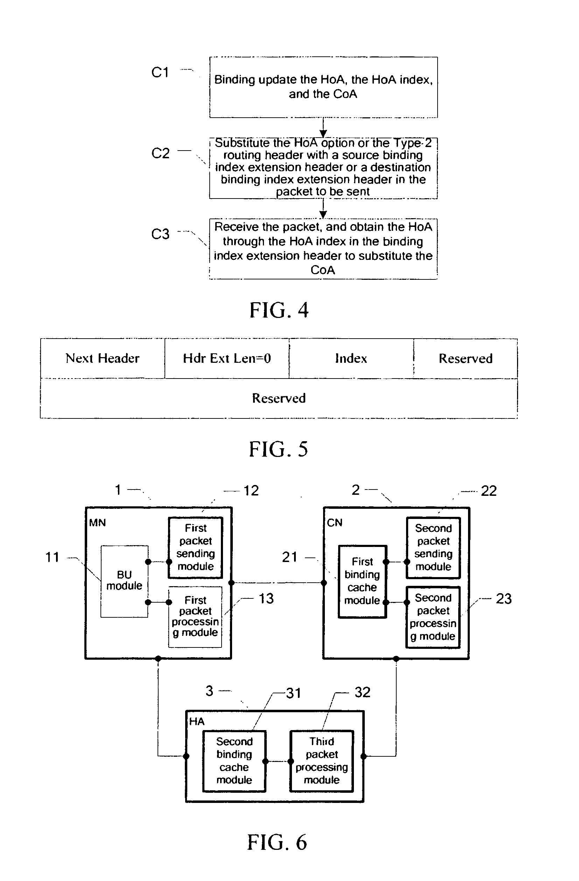

In a third embodiment, a method for communication in mobile lPv6 networks is also provided. Referring to FIG. 4, the method of this embodiment is substantially the same as that of the second embodiment, but the difference there-between lies in that, in this embodiment, two binding index extension headers are adopted to carry the HoA index. The method includes the following steps.

In Step C1, a BU process is performed to binding update the association relation among the HoA, the HoA index, and the CoA to a binding cache entry of a communication node required for communication. This step may be carried out according to Step A1 in the first embodiment.

In Step C2, two binding index extension headers, i.e., a source binding index extension header and a destination binding index extension header, are added to the lPv6 header for carrying the HoA index, the HoA option or the Type-2 routing header is removed from the packet, and then, the packet is sent.

In this embodiment, the two binding index extension headers both adopt a format shown in FIG. 5. The source binding index extension header and the destination binding index extension header are distinguished from each other by the next header indicator of the previous header in the same packet. In the format of the two extension headers, the field of "Next Header" indicates the next extension header, the field of "Hdr Ext Len" indicates a length of this extension header, and the field of "Index" carries the HoA index value, which occupies 8 bits. Furthermore, if the length of the Index exceeds 8 bits, the bits of the following "Reserved" part can be used.

The following two sending circumstances are provided according to different binding index extension headers.
1. When the MN in a foreign link sends a packet to the CN or the HA, the HoA option carried in the destination option extension header is removed from the packet, and a source binding index extension header is added to the IPv6 header of the packet for carrying the HoA index corresponding to the HoA of the MN. At this time, the HoA index value is placed in the Index field of the source binding index extension header.
2. When the CN sends a packet to the MN in a foreign link, the Type-2 routing header is removed from the packet, and a destination binding index extension header is added to the IPv6 header of the packet for carrying the HoA index corresponding to the HoA of the MN. At this time, the HoA index value is placed in the Index field of the destination binding index extension header.

In Step C3, the packet carrying the source/destination binding index extension header is received, and the HoA corresponding to the HoA index is obtained to substitute the CoA in the packet. Similarly, two receiving circumstances are provided according to different binding index extension headers.
1. After the CN or the HA receives the packet carrying the source binding index extension header sent from the MN, a binding entry is searched for according to the CoA of the MN in the packet, and then, the HoA corresponding to the Index value is obtained to substitute the source address CoA in the packet.
2. After the MN receives the packet carrying the destination binding index extension header, the HoA corresponding to the Index value is obtained to substitute the destination address CoA in the packet.

In a fourth embodiment, a system for communication in mobile IPv6 networks is provided. Referring to FIG. 6, the system includes an MN 1, a CN 2, and an HA 3.

The MN 1 includes a BU module 11 serving as an index association module, a first packet sending module 12, and a first packet processing module 13.

The BU module 11 is adapted to send a BU message containing an HoA and an HoA index corresponding to the HoA to the HA 3 and/or the CN 2, so as to notify the HA 3 and/or the CN 2 of an association relation between the HoA and the HoA index of the MN 1.

The first packet sending module 12 is adapted to remove an HoA option from a packet when the MN 1 in a foreign link sends the packet to the CN 2 or the HA 3, and then set a binding index option carrying the HoA index corresponding to the HoA of the MN 1 in a mobility header of the packet according to the association relation in the BU module 11.

The first packet processing module 13 is adapted to receive the packet carrying the binding index option sent from the CN 2, and obtain the HoA corresponding to the HoA index in the binding index option to substitute a CoA in the packet.

The CN 2 includes a first binding cache module 21, a second packet sending module 22, and a second packet processing module 23.

The first binding cache module 21 is adapted to perform binding update according to the BU message sent from the MN 1, so as to bind the HoA, the HoA index, and the CoA, and thus store the association relation between the HoA and the HoA index notified by the MN I.

The second packet sending module 22 is adapted to remove a Type-2 routing header from a packet when the CN 2 sends the packet to the MN 1 in a foreign link, and then set a binding index option carrying the HoA index corresponding to the HoA of the MN 1 in a mobility header of the packet according to the association relation stored in the first binding cache module 21.

The second packet processing module 23 is adapted to receive the packet carrying the binding index option sent from the MN I, search for a binding entry according to the CoA of the MN 1 in the packet, and obtain the HoA corresponding to the HoA index in the binding index option to substitute the CoA in the packet.

The HA 3 includes a second binding cache module 31 and a third packet processing module 32.

The second binding cache module 31 is adapted to perform binding update according to the BU message sent from the MN 1, so as to bind the HoA, the HoA index, and the CoA.

The third packet processing module 32 is adapted to receive the packet carrying the binding index option sent from the MN 1, search for a binding entry according to the CoA of the MN 1 in the packet, and obtain the HoA corresponding to the HoA index in the binding index option to substitute the CoA in the packet.

The system of this embodiment may employ the communication method provided in the first embodiment.

In a fifth embodiment, a system for communication in mobile IPv6 networks is further provided. The physical structure of this embodiment is substantially the same as that of the fourth embodiment, but the difference there-between lies in that, in the system of this embodiment, a binding index extension header is adopted to carry the HoA index in a packet transmitted between the entities. In this embodiment, the system includes an MN, a CN, and an HA.

The MN includes a BU module serving as an index association module, a first packet sending module, and a first packet processing module.

The BU module is adapted to send a BU message containing an HoA and an HoA index corresponding to the HoA to the HA and/or the CN, so as to notify the HA and/or the CN of an association relation between the HoA and HoA index of the MN.

The first packet sending module is adapted to remove an HoA option from a packet when the MN in a foreign link sends the packet to the CN or the HA, and then set a binding index extension header carrying the HoA index corresponding to the HoA of the MN in the packet according to the association relation in the BU module.

The first packet processing module is adapted to receive the packet carrying the binding index extension header from the CN, and obtain the HoA corresponding to the HoA index in the binding index extension header to substitute a CoA in the packet.

The CN includes a first binding cache module, a second packet sending module, and a second packet processing module.

The first binding cache module is adapted to perform binding update according to the BU message sent from the MN, so as to bind the HoA, the HoA index, and the CoA, and thus store the association relation between the HoA and the HoA index notified by the MN.

The second packet sending module is adapted to remove a Type-2 routing header from a packet when the CN sends the packet to the MN in a foreign link, and then set a binding index extension header carrying the HoA index corresponding to the HoA of the MN in the packet according to the association relation stored in the first binding cache module.

The second packet processing module is adapted to receive the packet carrying the binding index extension header from the MN, search for a binding entry according to the CoA of the MN in the packet, and obtain the HoA corresponding to the HoA index in the binding index extension header to substitute the CoA in the packet.

The HA includes a second binding cache module and a third packet processing module.

The second binding cache module is adapted to perform binding update according to the BU message from the MN, so as to bind the HoA, the HoA index, and the CoA.

The third packet processing module is adapted to receive the packet carrying the binding index extension header from the MN, search for a binding entry according to the CoA of the MN in the packet, and obtain the HoA corresponding to the HoA index in the binding index extension header to substitute the CoA in the packet.

The system of this embodiment may employ the communication method provided in the second or third embodiment.

To sum up, in the embodiments of the present invention, an HoA index option or a binding index extension header carrying an HoA index is adopted to substitute an HoA option and a Type-2 routing header in a communication packet. As the HoA index is usually a simple pointer, the occupied space of the header is greatly reduced. Meanwhile, the HoA index is simple in content and is not relevant to any privacy parameter in content, thus ensuring the security of communication. Furthermore, even if a plurality of HoAs of the MN is bound to the same CoA, it does not cause any confusion. In addition, according to the embodiments of the present invention, a BU message is employed to notify the association relation between the HoA and the HoA index, so that the notification process has a higher security and is easily implemented.

In view of the above, the BU method and the method and system for communication in mobile IPv6 networks have been described in detail. The principle and implementation of the present invention are illustrated with exemplary embodiments. However, the above embodiments are only intended to explain the method and key points of the present invention, instead of limiting the scope of the present invention. It will be apparent to those skilled in the art that various modifications and variations can be made to the structure of the present invention. Therefore, the content of the specification is not intended to limit the scope of the present invention.

## Claims

1. A mobile node, MN, (1) in a system for communication in mobile IPv6 networks, comprising:
a binding update, BU, (11) module, adapted to send a BU message to a destination node, wherein the BU message comprises a home address, HoA, an d an HoA index corresponding to the HoA, and
a first packet sending module (12), adapted to send a packet to the destination node, wherein when the MN (1) is in a foreign link, the first packet sending module (12) carries the HoA index corresponding to the HoA in the packet to be sent, and removes the HoA from the packet,
and wherein the HoA index is a location mark or an array subscript of each HoA in an HoA list stored in the MN (1), **characterized in that**
the packet carrying the HoA index comprises a binding index extension header for carrying the HoA index, and
a field T of the binding index extension header takes values 1 or 0 and indicates whether the HoA corresponding to the HoA index carried by the binding index extension header substitutes a source address or a destination address in the packet.

2. The MN according to claim 1, further comprising: a first packet processing module (13), adapted to receive the packet carrying the HoA index and obtain the HoA corresponding to the HoA index.

3. A method for communication in mobile IPv6 networks, comprising:
notifying (A112) a destination node in communication of an association relation between a home address, HoA, and an HoA index of a mobile node, MN; and
carrying (A2) the HoA index in an interactive packet between the MN and the destination node, and then obtaining (A3), by the MN or the destination node as a receiving end of the packet, the HoA through the HoA index, and wherein
the HoA index is a location mark or an array subscript of each HoA in an HoA list stored in the MN, **characterized in that**
the carrying the HoA index in the interactive packet further comprises: setting a binding index extension header carrying the HoA index corresponding to the HoA of the MN in the interactive packet; and
a field T of the binding index extension header takes values 1 or 0 and indicates whether the HoA corresponding to the HoA index carried by the binding index extension header substitutes a source address or a destination address in the packet.

4. The method for communication in mobile IPv6 networks according to claim 3, wherein when the MN is in a foreign link, the interactive packet further comprises a care of address, CoA, of the MN; and
the obtaining (A3), by the destination node as the receiving end of the packet, the HoA through the HoA index further comprises: receiving, by the destination node, the packet carrying the HoA index, and searching for the HoA corresponding to the HoA index according to the CoA of the MN in the packet.

5. The method for communication in mobile IPv6 networks according to claim 3, wherein the notifying (A112) the destination node of the association relation between the HoA and HoA index of the MN further comprises:
sending, by the MN, a binding update, BU, message to the destination node, wherein the BU message comprises the HoA, HoA index corresponding to the HoA, and a care of address, CoA, of the MN; and
performing, by the destination node, binding update according to the BU message, so as to bind the HoA, HoA index, and the CoA.

6. A system for communication in mobile IPv6 networks, comprising:
a mobile node, MN, (1), adapted to notify a destination node of an association relation between an home address, HoA and an HoA index thereof, wherein when the MN (I) is in a foreign link, the HoA index corresponding to the HoA is carried in a packet to be sent; and
a destination node, adapted to receive and store the association relation between the HoA and the HoA index of the MN (1), receive the packet carrying the HoA index, and obtain the corresponding HoA according to the HoA index, and wherein
the HoA index is a location mark or an array subscript of each HoA in an HoA list stored in the MN (I), **characterized in that**
the packet carrying the HoA index further comprises a binding index extension header for carrying the HoA index, and
a field T of the binding index extension header takes values 1 or 0 and indicates whether the HoA corresponding to the HoA index carried by the binding index extension header substitutes a source address or a destination address in the packet.

7. The system for communication in mobile IPv6 networks according to claim 6, wherein the destination node is a communication node, CN, (2), and the CN (2) is further adapted to carry the HoA index corresponding to the HoA of the MN (1) in a packet when sending the packet to the MN (1) located at a foreign link; and the CN (2) comprises:
a first association storage module, adapted to receive and store the association relation between the HoA and the HoA index of the MN (1);
a second packet processing module (23), adapted to receive the packet carrying the HoA index and obtain the corresponding HoA according to the HoA index; and
a second packet sending module (22), adapted to send a packet to the MN (1) located at a foreign link, carry the HoA index corresponding to the HoA of the MN (1) in the packet and remove the HoA from the packet.

8. The system for communication in mobile IPv6 networks according to claim 7, wherein the first association storage module comprises a first binding cache module (21) adapted to receive a binding update, BU, message from the MN (1), and bind the HoA, the HoA index, and a CoA of the MN (1) carried in the BU message.

9. The system for communication in mobile IPv6 networks according to one of the claims 6 to 8, wherein the destination node is a home agent, HA, (3), and the HA (3) comprises:
a second association storage module, adapted to store the association relation between the HoA and the HoA index of the MN (1); and
a third packet processing module (32), adapted to receive the packet carrying the HoA index, and obtain the HoA corresponding to the HoA index.

10. The system for communication in mobile IPv6 networks according to claim 9, wherein the second association storage module comprises a second binding cache module (31) adapted to receive a binding update, BU, message from the MN (1), so as to bind the HoA, the HoA index, and a CoA in the BU message.

## Patentansprüche

1. Mobiler Knoten MN (1) in einem System zur Kommunikation in mobilen IPv6-Netzen umfassend:
ein BU-Modul (11) (BU = Binding Update: verbindliche Aktualisierung) eingerichtet zum Senden einer BU-Nachricht zu einem Zielknoten, wobei die BU-Nachricht eine Heimatadresse HoA und einen der HoA entsprechenden HoA-Index umfasst; und
ein erstes Paketsendemodul (12) eingerichtet zum Senden eines Pakets zum Zielknoten, wobei, wenn sich der MN (1) in einer fremden Verbindungsstrecke befindet, das erste Paketsendemodul (12) den der HoA entsprechenden HoA-Index in dem zu sendenden Paket führt und die HoA aus dem Paket entfernt,
und wobei der HoA-Index eine Standortmarke oder ein Feldindex jeder HoA in einer in dem MN (1) gespeicherten HoA-Liste ist, **dadurch gekennzeichnet, dass** das den HoA-Index führende Paket einen verbindlichen Indexerweiterungskopfteil zum Führen des HoA-Indexes umfasst, und
ein Feld T des verbindlichen Indexerweiterungskopfteils Werte 1 oder 0 annimmt und anzeigt, ob die dem durch den verbindlichen Indexerweiterungskopfteil geführten HoA-Index entsprechende HoA eine Ursprungsadresse oder eine Zieladresse im Paket ersetzt.

2. MN nach Anspruch 1, weiterhin umfassend ein erstes Paketverarbeitungsmodul (13) eingerichtet zum Empfangen des den HoA-Index führenden Pakets und Beschaffen der dem HoA-Index entsprechenden HoA.

3. Verfahren zur Kommunikation in mobilen IPv6-Netzen umfassend:
Benachrichtigen (A112) eines Zielknotens in Kommunikation über ein Zugehörigkeitsverhältnis zwischen einer Heimatadresse des Hoa und einem HoA-Index eines mobilen Knotens MN und
Führen (A2) des HoA-Indexes in einem interaktiven Paket zwischen dem MN und dem Zielknoten und dann Beschaffen (A3) durch den MN oder den Zielknoten als ein Empfangsende des Pakets, der HoA durch den HoA-Index und wobei der HoA-Index eine Standortmarke oder ein Feldindex jeder HoA in einer in dem MN gespeicherten HoA-Liste ist, **dadurch gekennzeichnet, dass** das Führen des HoA-Indexes im interaktiven Paket weiterhin Einstellen eines den HoA-Index führenden verbindlichen Indexerweiterungskopfteils entsprechend der HoA des MN im interaktiven Paket umfasst; und
ein Feld T des verbindlichen Indexerweiterungskopfteils Werte 1 oder 0 annimmt und anzeigt, ob die dem durch den verbindlichen Indexerweiterungskopfteil geführten HoA-Index entsprechende HoA eine Ursprungsadresse oder eine Zieladresse im Paket ersetzt.

4. Verfahren zur Kommunikation in mobilen IPv6-Netzen nach Anspruch 3, wobei, wenn sich der MN in einer fremden Verbindungsstrecke befindet, das interaktive Paket weiterhin eine Gastadresse CoA des MN umfasst; und
das Beschaffen (A3) durch den Zielknoten als das Empfangsende des Pakets der HoA durch den HoA-Index weiterhin umfasst: Empfangen durch den Zielknoten des den HoA-Index führenden Pakets und Suchen nach der dem HoA-Index entsprechenden HoA entsprechend der CoA des MN im Paket.

5. Verfahren zur Kommunikation in mobilen IPv6-Netzen nach Anspruch 3, wobei das Benachrichtigen (A112) des Zielknotens über das Zugehörigkeitsverhältnis zwischen der HoA und dem HoA-Index des MN weiterhin umfasst:
Senden durch den MN einer BU-Nachricht (BU = Binding Update - verbindliche Aktualisierung) zum Zielknoten, wobei die BU-Nachricht die HoA, den der HoA entsprechenden HoA-Index und eine Gastadresse CoA des MN umfasst; und
Durchführen durch den Zielknoten einer verbindlichen Aktualisierung entsprechend der BU-Nachricht zum Binden der HoA, des HoA-Indexes und der CoA.

6. System zur Kommunikation in mobilen IpV6-Netzen umfassend:
einen mobilen Knoten MN (1) eingerichtet zum Benachrichtigen eines Zielknotens über ein Zugehörigkeitsverhältnis zwischen einer Heimatadresse HoA und einem HoA-Index derselben, wobei, wenn sich der MN (1) in einer fremden Verbindungsstrecke befindet, der der HoA entsprechende HoA-Index in einem zu sendenden Paket geführt wird; und
einen Zielknoten eingerichtet zum Empfangen und Speichern des Zugehörigkeitsverhältnisses zwischen der HoA und dem HoA-Index des MN (1), Empfangen des den HoA-Index führenden Pakets und Beschaffen der entsprechenden HoA entsprechend dem HoA-Index, und wobei der HoA-Index eine Standortmarke oder ein Feldindex jeder HoA in einer im MN (1) gespeicherten HoA-Liste ist, **dadurch gekennzeichnet, dass**
das den HoA-Index führende Paket weiterhin einen verbindlichen Indexerweiterungskopfteil zum Führen des HoA-Indexes umfasst, und
ein Feld T des verbindlichen Indexerweiterungskopfteils Werte 1 oder 0 annimmt und anzeigt, ob die dem durch den verbindlichen Indexerweiterungskopfteil geführten HoA-Index entsprechende HoA eine Ursprungsadresse oder eine Zieladresse im Paket ersetzt.

7. System zur Kommunikation in mobilen IPv6-Netzen nach Anspruch 6, wobei der Zielknoten ein Kommunikationsknoten CN (2) ist und der CN (2) weiterhin zum Führen des dem HoA des MN (1) entsprechenden HoA-Indexes in einem Paket bei Senden des Pakets zu dem sich in einer fremden Verbindungsstrecke befindlichen MN (1) eingerichtet ist; und der CN (2) umfasst:
ein erstes Zugehörigkeitsspeicherungsmodul eingerichtet zum Empfangen und Speichern des Zugehörigkeitsverhältnisses zwischen der HoA und dem HoA-Index des MN (1);
ein zweites Paketverarbeitungsmodul (23) eingerichtet zum Empfangen des den HoA-Index führenden Pakets und Beschaffen der entsprechenden HoA gemäß dem HoA-Index; und
ein zweites Paketsendemodul (22) eingerichtet zum Senden eines Pakets zu dem in einer fremden Verbindungsstrecke befindlichen MN (1), Führen des der HoA des MN (1) entsprechenden HoA-Indexes in dem Paket und Entfernen der HoA aus dem Paket.

8. System zur Kommunikation in mobilen IPv6-Netzen nach Anspruch 7, wobei das erste Zugehörigkeitsspeicherungsmodul ein erstes verbindliches Cache-Speichermodul (21) eingerichtet zum Empfangen einer BU-Nachricht (BU = Binding Update - verbindliche Aktualisierung) vom MN (1) und Binden der HoA, des HoA-Indexes und einer in der BU-Nachricht geführten CoA des MN (1) umfasst.

9. System zur Kommunikation in mobilen IPv6-Netzen nach einem der Ansprüche 6 bis 8, wobei der Zielknoten ein Heimatagent HA (3) ist und der HA (3) umfasst:
ein zweites Zugehörigkeitsspeicherungsmodul eingerichtet zum Speichern des Zugehörigkeitsverhältnisses zwischen der HoA und dem HoA-Index des MN (1); und
ein drittes Paketverarbeitungsmodul (32) eingerichtet zum Empfangen des den HoA-Index führenden Pakets und Beschaffen der dem HoA-Index entsprechenden HoA.

10. System zur Kommunikation in mobilen IPv6-Netzen nach Anspruch 9, wobei das zweite Zugehörigkeitsspeicherungsmodul ein zweites verbindliches Cache-Speichermodul (31) eingerichtet zum Empfangen einer BU-Nachricht (BU = Binding Update - verbindliche Aktualisierung) vom MN (1) zum Binden der HoA, des HoA-Indexes und einer CoA in der BU-Nachricht umfasst.

## Revendications

1. Noeud mobile, MN, (1) dans un système de communication dans des réseaux mobiles IPv6, comprenant :
un module d'actualisation de liaison, BU, (11), adapté pour envoyer un message BU à un noeud destinataire, le message BU comprenant une adresse de rattachement, HoA, et un indice HoA correspondant à la HoA ; et
un premier module d'envoi de paquet (12), adapté pour envoyer un paquet au noeud destinataire, dans lequel quand le MN (1) se trouve dans une liaison étrangère, le premier module d'envoi de paquet (12) inclut l'indice HoA correspondant à la HoA dans le paquet à envoyer, et supprime la HoA du paquet,
et dans lequel
l'indice HoA est un repère de position ou un indice inférieur de réseau de chaque HoA dans une liste de HoA mémorisée dans le MN (1), **caractérisé en ce que** le paquet incluant l'indice HoA comprend un en-tête d'extension d'indice de liaison destiné à inclure l'indice HoA, et
un champ T de l'en-tête d'extension d'indice de liaison prend les valeurs 1 ou 0 et indique si la HoA correspondant à l'indice HoA inclus dans l'en-tête d'extension d'indice de liaison se substitue à une adresse source ou à une adresse destinataire dans le paquet.

2. MN selon la revendication 1, comprenant en outre : un premier module de traitement de paquet (13), adapté pour recevoir le paquet incluant l'indice HoA et obtenir la HoA correspondant à l'indice HoA.

3. Procédé de communication dans des réseaux mobiles IPv6, comprenant :
la notification (A112) à un noeud destinataire en communication d'une relation d'association entre une adresse de rattachement, HoA, et un indice HoA d'un noeud mobile, MN ; et
l'inclusion (A2) de l'indice HoA dans un paquet interactif entre le MN et le noeud destinataire, puis l'obtention (A3), par le MN ou le noeud destinataire comme extrémité réceptrice du paquet, de la HoA par le biais de l'indice HoA, et dans lequel l'indice HoA est un repère de position ou un indice inférieur de réseau de chaque HoA dans une liste de HoA mémorisée dans le MN, **caractérisé en ce que** l'inclusion de l'indice HoA dans le paquet interactif comprend en outre : le réglage d'un en-tête d'extension d'indice de liaison incluant l'indice HoA correspondant à la HoA du MN dans le paquet interactif ; et
un champ T de l'en-tête d'extension d'indice de liaison prend les valeurs 1 ou 0 et indique si la HoA correspondant à l'indice HoA inclus dans l'en-tête d'extension d'indice de liaison se substitue à une adresse source ou à une adresse destinataire dans le paquet.

4. Procédé de communication dans des réseaux mobiles IPv6 selon la revendication 3, dans lequel quand le MN se trouve dans une liaison étrangère, le paquet interactif comprend en outre une adresse temporaire, CoA, du MN ; et
l'obtention (A3), par le noeud destinataire comme extrémité réceptrice du paquet, de la HoA par le biais de l'indice HoA comprend en outre : la réception, par le noeud destinataire, du paquet incluant l'indice HoA, et la recherche de la HoA correspondant à l'indice HoA en fonction de la CoA du MN dans le paquet.

5. Procédé de communication dans des réseaux mobiles IPv6 selon la revendication 3, dans lequel la notification (A112) au noeud destinataire de la relation d'association entre la HoA et l'indice HoA du MN comprend en outre :
l'envoi, par le MN, d'un message d'actualisation de liaison, BU, au noeud destinataire, dans lequel le message BU comprend la HoA, l'indice HoA correspondant à la HoA et une adresse temporaire, CoA, du MN ; et
l'exécution, par le noeud destinataire, de l'actualisation de liaison en fonction du message BU, de manière à lier la HoA, l'indice HoA et la CoA.

6. Système de communication dans des réseaux mobiles IPv6, comprenant :
un noeud mobile, MN, (1), adapté pour notifier un noeud destinataire d'une relation d'association entre une adresse de rattachement, HoA, et un indice HoA de celui-ci, dans lequel quand le MN (1) se trouve dans une liaison étrangère, l'indice HoA correspondant à la HoA est inclus dans un paquet à envoyer ; et
un noeud destinataire, adapté pour recevoir et mémoriser la relation d'association entre la HoA et l'indice HoA du MN (1), recevoir le paquet incluant l'indice HoA, et obtenir la HoA correspondante en fonction de l'indice HoA, et dans lequel l'indice HoA est un repère de position ou un indice inférieur de réseau de chaque HoA dans une liste de HoA mémorisée dans le MN (1), **caractérisé en ce que** le paquet incluant l'indice HoA comprend en outre un en-tête d'extension d'indice de liaison destiné à inclure l'indice HoA, et
un champ T de l'en-tête d'extension d'indice de liaison prend les valeurs 1 ou 0 et indique si la HoA correspondant à l'indice HoA inclus dans l'en-tête d'extension d'indice de liaison se substitue à une adresse source ou à une adresse destinataire dans le paquet.

7. Système de communication dans des réseaux mobiles IPv6 selon la revendication 6, dans lequel le noeud destinataire est un noeud de communication, CN, (2), et le CN (2) est adapté en outre pour inclure l'indice HoA correspondant à la HoA du MN (1) dans un paquet lors de l'envoi du paquet au MN (1) situé au niveau d'une liaison étrangère ; et le CN(2) comprend :
un premier module de mémorisation d'association, adapté pour recevoir et mémoriser la relation d'association entre la HoA et l'indice HoA du MN (1) ;
un deuxième module de traitement de paquet (23), adapté pour recevoir le paquet incluant l'indice HoA et obtenir la HoA correspondante en fonction de l'indice HoA ; et
un deuxième module d'envoi de paquet (22), adapté pour envoyer un paquet au MN (1) situé au niveau d'une liaison étrangère, inclure l'indice HoA correspondant à la HoA du MN (1) dans le paquet et supprimer la HoA du paquet.

8. Système de communication dans des réseaux mobiles IPv6 selon la revendication 7, dans lequel le premier module de mémorisation d'association comprend un premier module cache de liaison (21) adapté pour recevoir un message d'actualisation de liaison, BU, depuis le MN (1), et lier la HoA, l'indice HoA, et une CoA du MN (1) incluse dans le message BU.

9. Système de communication dans des réseaux mobiles IPv6 selon l'une des revendications 6 à 8, dans lequel le noeud destinataire est un agent de rattachement, HA, (3) et le HA (3) comprend :
un deuxième module de mémorisation d'association, adapté pour mémoriser la relation d'association entre la HoA, et l'indice HoA du MN (1) ; et
un troisième module de traitement de paquet (32), adapté pour recevoir le paquet incluant l'indice HoA, et obtenir la HoA correspondant à l'indice HoA.

10. Système de communication dans des réseaux mobiles IPv6 selon la revendication 9, dans lequel le deuxième module de mémorisation d'association comprend un deuxième module cache de liaison (31) adapté pour recevoir un message d'actualisation de liaison, BU, depuis le MN (1), de manière à lier la HoA, l'indice HoA, et une CoA dans le message BU.
